# EUROPEAN PATENT SPECIFICATION

(11) **EP 4 258 629 B1**
(45) Date of publication and mention of the grant of the patent: **08.07.2026**
(21) Application number: 20965025.8
(22) Date of filing: 07.12.2020
(51) Int. Cl.: H04M 1/00, H04M 1/02

(54) **THIN MOBILE COMMUNICATION TERMINAL, AND CONTROL METHOD AND CONTROL PROGRAM THEREOF**
DÜNNES MOBILES KOMMUNIKATIONSENDGERÄT UND STEUERVERFAHREN UND STEUERPROGRAMM DAFÜR
TERMINAL DE COMMUNICATION PORTABLE FIN, ET PROCÉDÉ ET PROGRAMME DE COMMANDE

(43) Date of publication of application: 11.10.2023
(73) Proprietor: Robogarage Singapore Pte. Ltd., Singapore 079903 (SG)
(72) Inventor: TAKAHASHI Tomotaka, Otsu-shi, Shiga 520-0803 (JP)
(74) Representative: AWA Sweden AB
(86) International application number: PCT/JP2020/045546
(87) International publication number: WO 2022/123639

(56) References cited:
- JP-A- 2003 285 288
- JP-A- 2006 262 426
- JP-A- 2009 177 761
- JP-A- 2013 042 476
- JP-S- 1 641 986
- US-A1- 2010 171 464

## Description

### BACKGROUND OF THE INVENTION

### 1. Field of the Invention

The present invention relates to a thin mobile communication terminal that is also capable of operating as a robot and automatically being recharged, and a control method and control program thereof.

### 2. Description of Related Art

Various efforts have been made to provide a cell phone, which has become a familiar item for users, with a character to cause the users to feel more familiar. For example, PCT/JP2019/023711 discloses a thin mobile communication terminal that can be used in a thin form, but can also serve as a robot. Also, Japanese Laid-Open Patent Publication No. 2006-236333 discloses a vacuum cleaner configured to be able to move independently and communicate sequentially with a charger so that if communication with the charger is lost, the cleaner can return to the position where communication was last established and return itself to the charger. JP1641986S relates to a mobile phone capable of automatically performing robot-like movements. US2010/171464A1 relates to a method of charging a mobile device. JP2013042476A relates to a moving body toy. JP2003285288 relates to a charging system comprising a robot device. JP2006262426A relates to a figure-type mobile phone. JP2009177761A relates to a robot type mobile phone.

### SUMMARY OF THE INVENTION

When the thin mobile communication terminal as described in PCT/JP2019/023711 above is driven as a robot, it naturally consumes power. Accordingly, it is desirable to have a configuration that automatically charges the battery in the thin mobile communication terminal. It is conceivable to allow a charger to have a communication function and communicate with a thin mobile communication terminal to guide it to the charger to perform charging as in JP2006-236333A above. However, a problem is in that it may be hard to employ the configuration of JP2006-236333A above if the automatic charging above is embodied by using an existing OS or application for a thin mobile communication terminal in a manner compliant with existing communication devices such as smart phones.

An object of the present invention is to provide a mobile communication terminal that can be driven as a robot that can be automatically recharged, and a control method and control program thereof.

In order to solve the above problem, a mobile communication terminal, as defined in claim 1, is provided according to a first aspect of the present invention.

A method for controlling a mobile communication terminal, as defined in claim 8, is provided according to a second aspect of the present invention.

A program, as defined in claim 9, is provided according to a third aspect of the present invention.

Any embodiment which does not fall within the scope of the claims does not form part of the invention, but is rather included as an illustrative example that is useful for understanding the invention.

In addition, in the thin mobile communication terminal above, the leg may include: a first rotary shaft with an axis direction in a direction of the short sides of the enclosure; a second rotary shaft coaxial with the first rotary shaft; a right wheel at one end of the first rotary shaft; a left wheel at one end of the second rotary shaft; a first traveling motor that is provided at another end of the first rotary shaft and drives the right wheel; and a second traveling motor that is provided at another end of the second rotary shaft and drives the left wheel. If the controller further determines that the charger is not included in the image captured by the imaging unit, the controller may drive the first traveling motor and second traveling motor to change an angle of view of the imaging unit in a horizontal direction to search for the charger.

Further, in the thin mobile communication terminal above, if the controller determines that the charger is included in the captured image, the controller may drive the first traveling motor and second traveling motor to move the terminal toward the charger on the basis of a position of the charger in the captured image.

Moreover, in the thin mobile communication terminal above, the imaging unit may perform sequential imaging while the terminal moving toward the charger, and the controller may rotate the rotary motor so that the charger is included in a captured image each time the imaging unit images.

Furthermore, in the thin mobile communication terminal above, the controller may stop the first and second traveling motors if a rotation angle of the rotary motor reaches a predetermined angle.

In addition, in the thin mobile communication terminal above, the controller may stop the first traveling motor and second traveling motor if a predetermined object on the charger is present in the image captured by the imaging unit.

Further, in the thin mobile communication terminal above, the thin mobile communication terminal may further include: a storage battery; and a charging unit that charges the storage battery with electric power. The charging unit may receive a wireless power supply from the charger and charge the storage battery.

The thin mobile communication terminal in accordance with an aspect of the present disclosure includes a hand and a leg, and the leg is configured to be able to move independently, thus providing a mobile communication terminal that is capable of operating as a robot without compromising portability.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A is a perspective view illustrating an appearance of a mobile communication terminal viewed from a front side,
FIG. 1B is a perspective view illustrating the appearance of the mobile communication terminal viewed from a rear side,
FIG. 2A is a plan view illustrating the mobile communication terminal,
FIG. 2B is a top view illustrating the mobile communication terminal,
FIG. 2C is a bottom view illustrating the mobile communication terminal,
FIGS. 3A and 3B each are a left side view illustrating the mobile communication terminal,
FIGS. 4A and 4B are external views illustrating an example of driving the mobile communication terminal,
FIG. 5 is a block diagram illustrating an example of a functional configuration of the mobile communication terminal,
FIG. 6 is a flowchart illustrating an example of operation during automatic charging of the mobile communication terminal,
FIGS. 7A to 7C are diagrams illustrating a relationship between an angle of view from a side of the mobile communication terminal and a charger,
FIGS. 8A and 8B illustrate a relationship between an angle of view from a top of the mobile communication terminal and the charger, and
FIGS. 9A to 9C illustrate examples of forms of chargers.

### DETAILED DESCRIPTION OF EMBODIMENTS

### Embodiment

A mobile communication terminal 100 is directed to a thin portable communication device represented by a smartphone or tablet terminal as well as a device that is also capable of serving as a robot, which can also be described as a mobile portable terminal. The present embodiment describes a method that allows automatic recharging to be performed using existing software in mobile communication terminals in which new configuration is added as little as possible. An example of a mobile communication terminal according to the present embodiment will be described below with reference to the drawings.

### Configuration

### Configuration of Mobile Communication Terminal 100

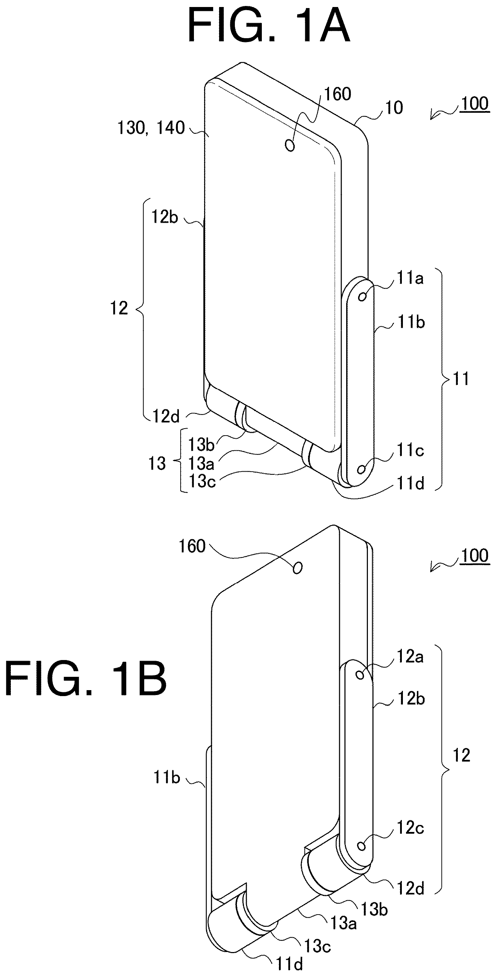

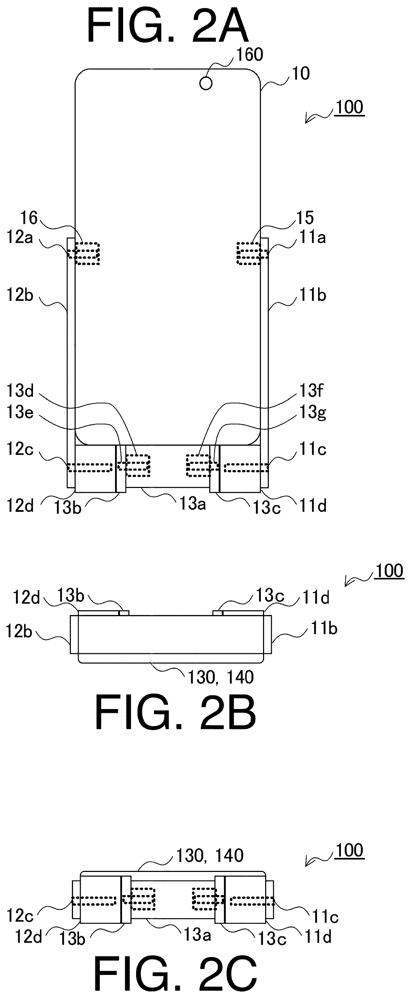

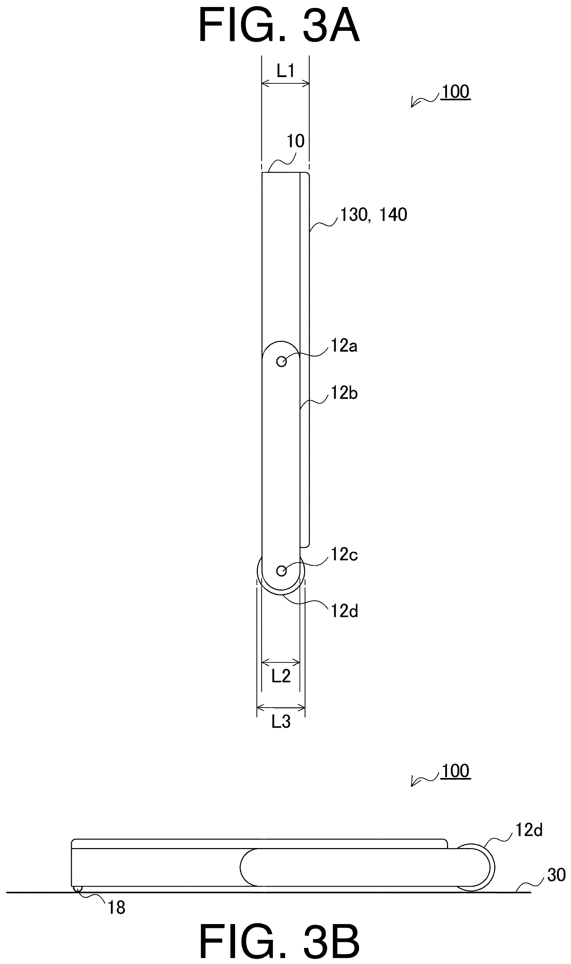

First, with reference to FIGS. 1A to 3B, the configuration of the mobile communication terminal 100 will be described. FIG. 1A is a perspective view illustrating the mobile communication terminal 100 viewed from the front side, and FIG. 1B is a perspective view illustrating the mobile communication terminal 100 viewed from the rear side. FIG. 2A is a plan view illustrating the mobile communication terminal 100 viewed from the front side, FIG. 2B is a top view illustrating the mobile communication terminal 100, and FIG. 2C is a bottom view illustrating the mobile communication terminal 100. FIG. 3A is a left side view illustrating the mobile communication terminal 100, and FIG. 3B is a right side view illustrating the mobile communication terminal 100.

As shown in FIGS. 1A to 3B, the mobile communication terminal 100 includes a rectangular enclosure 10, two arms 11 and 12, one end of each of which is rotationally and freely supported with respect to a corresponding side surface of the long sides, hands 11d and 12d on the corresponding other ends of the two arms 11 and 12, and autonomous movable leg 13 provided on one of the short sides of the enclosure 10.

As shown in FIGS. 2A to 2C, the enclosure 10 of the mobile communication terminal 100 includes a rotary motor 15 inside it, which freely rotates the rotary shaft 11a in clockwise and counterclockwise directions. The rotary motor 15 is driven by electric power supplied from the power supply (not shown) of the mobile communication terminal 100 and controlled by a controller 190 of the mobile communication terminal 100 (described in detail below). The rotary shaft 11a is connected (fixed) to one end of an arm plate 11b. The arm plate 11b corresponds to a flat plate member parallel to the long side of the enclosure 10. When the rotary shaft 11a is rotated by the rotary motor 15, the arm plate 11b is also rotated about the rotary shaft 11a. A rotary shaft 11c is connected (fixed) to the other end of the arm plate 11b, and a hand 11d is connected to the rotary shaft 11c in a rotational manner. The hand 11d freely rotates about the rotary shaft 11c. The arm 11 serves as a left arm in the mobile communication terminal 100.

In the same manner, the enclosure 10 of the mobile communication terminal 100 includes a rotary motor 16 inside it, which freely rotates the rotary shaft 12a in clockwise and counterclockwise directions. In the same manner as in the rotary motor 15, the rotary motor 16 is also driven by electric power supplied from the power supply (not shown) of the mobile communication terminal 100 and controlled by the controller 190 of the mobile communication terminal 100 (described in detail below). The rotary shaft 12a is connected (fixed) to one end of an arm plate 12b. The arm plate 12b corresponds to a flat plate member parallel to the long side of the enclosure 10. When the rotary shaft 12a is rotated by the rotary motor 16, the arm plate 12b is also rotated about the rotary shaft 12a. A rotary shaft 12c is connected (fixed) to the other end of the arm plate 12b, and a hand 12d is connected to the rotary shaft 12c in a rotational manner. The hand 12d freely rotates about the rotary shaft 12c. The arm 12 serves as a right arm in the mobile communication terminal 100.

The mobile communication terminal 100 includes a protrusion 13a configured to protrude from the enclosure 10. As shown in FIGS. 2A to 2C, the protrusion 13a includes therein a first traveling motor 13d and a second traveling motor 13f. The first traveling motor 13d is driven by electric power supplied from the power source of the mobile communication terminal 100, and freely rotates a rotary shaft 13e. The second traveling motor 13f is driven by electric power supplied from the power source of the mobile communication terminal 100, and freely rotates a rotary shaft 13g. The first traveling motor 13d and the second traveling motor 13f are controlled independently. As understood from FIGS. 2A to 2C, both the rotary shaft 13e and the rotary shaft 13g are parallel to the short side of the enclosure 10.

A right wheel 13b is connected (fixed) to the rotary shaft 13e, and the right wheel 13b rotates in accordance with the rotation of the rotary shaft 13e. In the same manner, a left wheel 13c is connected (fixed) to the rotary shaft 13g, and the left wheel 13c rotates in accordance with the rotation of the rotary shaft 13g. The leg 13 is cconfigured by the protrusion 13a, the first traveling motor 13d and the second traveling motor 13f, the corresponding rotary shaft 13e and rotary shaft 13g, and the right wheel 13b and the left wheel 13c that are rotated by the corresponding rotary shafts 13e and 13g.

As shown in FIGS. 1A to 3B, the leg 13 is configured to be located between the hands 11d and 12d when the arm 11 is located at a superimposed and aligned position with respect to the enclosure 10 in a lateral view.

Further, as shown in FIGS. 3A and 3B, the mobile communication terminal 100 is configured to be flat when the arm 12 is in a position superimposed on the enclosure 10. This may also be applied to the arm 11. That is, the width L2 of the arm plate 12b of the arm 12 is configured to be less than or equal to the thickness L1 of the enclosure 10. Accordingly, the arm plate 12b is thinner than the enclosure 10 in the thickness direction of the enclosure 10, and the mobile communication terminal 100 is compactly configured as a whole. This may also be applied to the arm 11.

Further, the hand 12d is configured to have a size, i.e., the diameter L3 less than or equal to the thickness L1 of the enclosure 10. In the same manner, the hand 11d is configured to have a diameter less than or equal to the thickness L1 of the enclosure 10, and the diameter of the hand 11d is the same as that of the hand 12d. The hands 11d and 12d are configured to have a size less than or equal to the thickness of the enclosure 10, configuring the entire mobile communication terminal 100 thinner and improving the portability of the mobile communication terminal 100.

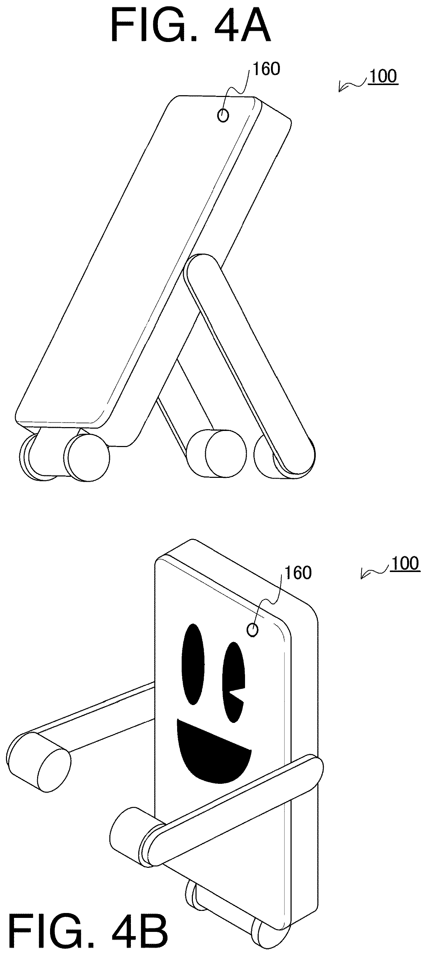

Such a mobile communication terminal 100 may be driven in the manner shown in FIGS. 4A and 4B, for example. FIGS. 4A and 4B each illustrate an example of the operation of the mobile communication terminal 100. FIG. 4A illustrates an example of a mobile communication terminal 100 traveling. As shown in FIG. 4A, the mobile communication terminal 100 is capable of moving (running) powered by the right wheel 13b and left wheel 13c of the leg 13. At this time, the mobile communication terminal 100 is allowed to be moved in a stable condition by causing the hands 11d and 12d to serve as auxiliary wheels to contact the ground. In the example in FIG. 4A, the hands 11d and 12d are in contact with the ground so that they are located on the rear side of the mobile communication terminal 100, but this could also be the front side. That is, the mobile communication terminal 100 may move with its arms in front of it.

FIG. 4B illustrates an example of another form of the mobile communication terminal 100. The mobile communication terminal 100 is caused to stand by itself on the basis of the balance control (i.e., inverted pendulum) by the motors of the right and left wheels 13b and 13c and the arms 11 and 12, and can also be represented as a robot by displaying, for example, a face and body on the display while moving the arms 11 and 12. As shown in FIG. 4B, the mobile communication terminal 100 is capable of standing by itself and even moving around in this state using the principle of inverted pendulum.

### Functional Configuration

As mentioned above, the mobile communication terminal 100 corresponds to a general mobile communication terminal such as a smartphone or tablet terminal, and as shown in FIGS. 1A and 2A, a touch panel that functions as an input unit 130 and display 140 are provided on a surface of the terminal, and an imaging unit 160, namely, a camera is also provided. As shown in FIG. 1B, the imaging unit 160 may also be provided on the rear side of the mobile communication terminal 100 (opposite the side on which the display 140 is provided). The functional configuration of the mobile communication terminal 100 will be described below.

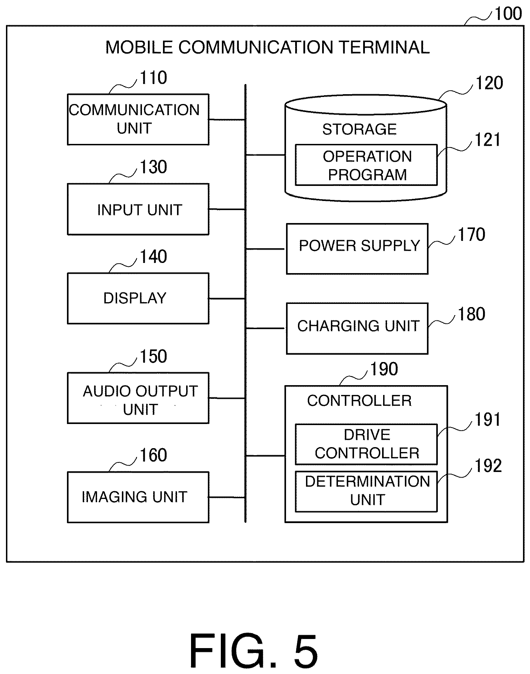

FIG. 5 is a block diagram illustrating an example of the functional configuration of the mobile communication terminal 100. As shown in FIG. 5, the mobile communication terminal 100 includes a communication unit 110, storage 120, input unit 130, display 140, audio output unit 150, imaging unit 160, power supply 170, charging unit 180, and controller 190.

The communication unit 110 is directed to a communication interface that serves to receive information from other devices via a network. The communication unit 110 communicates the received information to the controller 190. The communication unit 110 also transmits information instructed by the controller 190 to external devices. The communication unit 110 is capable of exchanging electronic information such as e-mail in the case where it serves as a mobile communication terminal, website information in the case where the user browses the Internet, and audio signals in the case where the user makes a phone call.

The storage 120 serves to store various programs and data required by the mobile communication terminal 100 to operate. The storage 120 may be, for example, various recording media such as hard disk drive (HDD), solid state drive (SSD), and flash storage. The storage 120 stores an operation program 121 for the mobile communication terminal 100 to operate as a robot. The operation program 121 includes a process that searches for a charger that is capable of wirelessly charging the mobile communication terminal 100 and moves to the location of the charger.

The input unit 130 serves to receive input from the user. The input unit 320 can be embodied by a touch panel, for example, but is not limited to the touch panel. The input unit 130 communicates the input contents received from the user to the controller 190. The input unit 130 may accept voice input, in which case the input unit 130 can be embodied by a microphone. Further, the input unit 130 may be embodied by other hardware keys.

The audio output unit 150 serves to output the audio signals in accordance with the instructions from the controller 190. The audio output unit 150 may be embodied, for example, by a speaker. The audio output unit 150 may, for example, output audio as lines of a robot. The audio output unit 150 may also output audio from a phone call.

The imaging unit 160 is directed to a camera that serves to capture images of the surroundings in accordance with the instructions from the input unit 130 and the controller 190. In this embodiment, an example in which the imaging unit 160 is provided on the front side of the mobile communication terminal 100 is illustrated, but this may be provided on the rear side or on both sides.

The power supply 170 is directed to a battery that serves to supply power to drive the various portions of the mobile communication terminal 100. The power supply 170 is directed to a chargeable/dischargeable battery, typically, embodied by a lithium-ion battery, but it is not limited thereto.

The charging unit 180 serves to receive transmitted power supply from an external charger (wireless charger) and charge the power supply 170 with the received power supply. The external charger performs the charging by wireless charging.

The controller 190 controls various portions of the mobile communication terminal 100 and may be embodied, for example, by a central processing unit (CPU), microprocessor, ASIC, and FPGA. The controller 190 is not limited to these examples, and may be any portion if it serves to control the mobile communication terminal 100. The controller 190 reads and executes various programs including the operation program 121 stored in the storage 120 to embody the functions to be performed by the mobile communication terminal 100. The controller 190 executes the process of moving toward the charger and executing charging under predetermined conditions. The controller 190 may also execute the process in accordance with the instructions by the user entered through the input unit 130. The controller 190 may also execute the process of information communicated by the communication unit 110.

The controller 190 includes a drive controller 191 and a determination unit 192 as functions to be implemented by the mobile communication terminal 100.

The drive controller 191 controls the arms 11, 12, and leg 13 when the mobile communication terminal 100 serves as a robot. The drive controller 191 controls the rotary motor 15 that operates the arm 11, the rotary motor 16 that operates the arm 12, the first traveling motor 13d that operates the right wheel 13b, and the second traveling motor 13f that operates the left wheel 13c in accordance with the movement information 123 that defines a predetermined movement pattern to allow the mobile communication terminal 100 to operate as if it is a robot. For example, the drive controller 191 is capable of advancing the mobile communication terminal 100 by rotating the first traveling motor 13d and the second traveling motor 13f both counterclockwise when viewed from the right side, and is capable of retreating the mobile communication terminal 100 by rotating them both clockwise when viewed from the right side. The drive controller 191 is also capable of rotating the mobile communication terminal 100 in place by rotating the first traveling motor 13d and the second traveling motor 13f in opposite directions. The drive controller 191 is capable of changing the angle between the main surface of the mobile communication terminal 100 including the imaging unit 160 and the ground surface by controlling the rotary motor 15 that operates the arm 11 and the rotary motor 16 that operates the arm 12, thereby changing the vertical angle of view (imaging direction) of the imaging unit 160. The angle of view in the horizonal direction (imaging direction) may be changed by rotating the right wheel 13b and left wheel 13c.

The determination unit 192 determines whether a charger capable of charging the power supply 170 of the mobile communication terminal 100 is present in the captured image taken by the imaging unit 160. Here, the determination unit 192 determines whether a charger is included in the captured image by determining whether a marker provided on the charger is included in the captured image, but the method for determining whether a charger is included in the captured image is not limited to this. Other methods are described below as variations.

The functional configuration of the mobile communication terminal 100 is described above.

### Operation

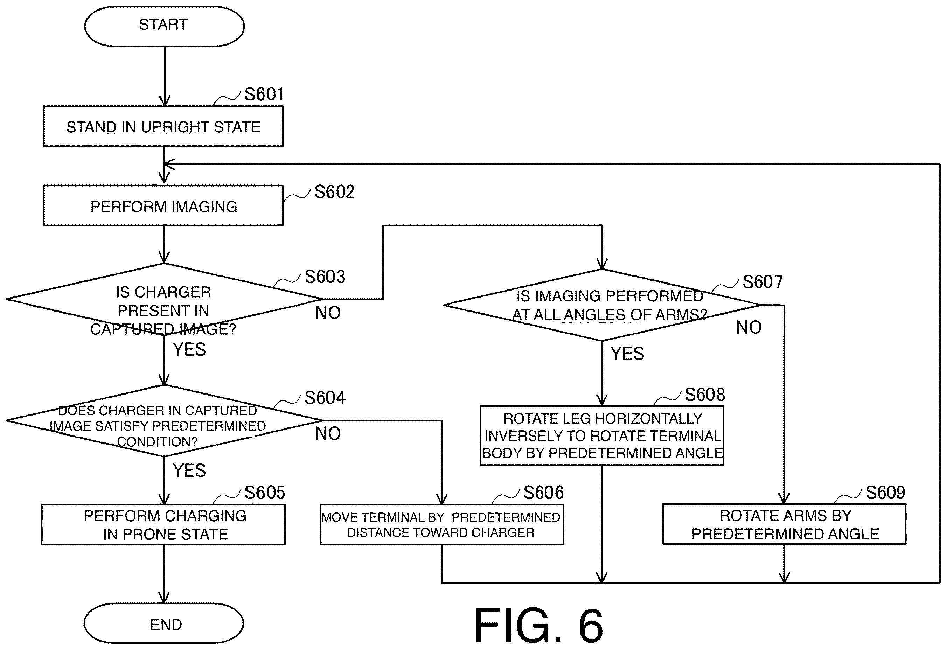

FIG. 6 is a flowchart illustrating an example of an operation of an automatic charging process by the mobile communication terminal 100.

The mobile communication terminal 100 may move toward the charger to perform charging under various conditions. Various conditions may include, for example, a case where a predetermined amount of time elapses without any input from the user of the mobile communication terminal 100, or a case where the amount of power in the power supply 170 falls below a predetermined threshold, or even any random case.

If the controller 190 of the mobile communication terminal 100 determines to perform charging, the drive controller 191 causes the mobile communication terminal 100 to stand in an upright state (step S601).

The controller 190 causes the imaging unit 160 to perform imaging (step S602). The imaging unit 160 communicates the captured image obtained through the imaging to the controller 190.

The determination unit 192 determines whether a charger is present in the transmitted captured image (step S603). If the determination unit 192 determines that the charger is not present in the captured image (NO in step S603), the controller 190 determines whether the imaging has been performed at all angles of the arms 11 and 12 (step S607). The imaging at all angles of the arms 11 and 12 may be a determination of whether imaging has been performed at all of a predetermined number of angles so that imaging by the mobile communication terminal 100 in the vertical direction can be performed in a somewhat exhaustive manner.

If imaging has been performed at all angles of the arms (YES in step S607), the drive controller 191 rotates the main body of the mobile communication terminal 100 by a predetermined angle by rotating the right wheel 13b and the left wheel 13c in opposite directions, respectively, by a predetermined angle (step S608), and returns to the process in step S602. If imaging at all angles of the arms is not performed (NO in step S607), the drive controller 191 rotates the rotary motors 15 and 16 of the arms 11 and 12 by a predetermined angle, respectively (step S609) to change the vertical imaging direction by the imaging unit 160 of the mobile communication terminal 100. The process then returns to step S602.

In contrast, if the determination unit 192 determines that a charger is present in the captured image (YES in step S603), the controller 190 determines whether the charger in the captured image satisfies a predetermined condition (step S604). Here, the predetermined condition is directed to a condition for determining whether the mobile communication terminal 100 is within a range of receiving wireless power supply from the charger. Here, as an example, the predetermined condition may be such that the marker is captured at a predetermined size or greater in the captured image, and that the arms 11 and 12 are at a predetermined angle (the mobile communication terminal 100 is in a state close to a prone state). The state in which the arms 11 and 12 are at a predetermined angle close to the prone state and the marker can be imaged at a predetermined size or greater may be recognized to correspond to a state in which the mobile communication terminal 100 is almost directly above the marker on the charger and is close enough from the charger.

If it is determined that the charger in the captured image does not satisfy the predetermined condition (NO in step S604), the drive controller 191 drives the first traveling motor 13d and the second traveling motor 13f to move the terminal 100 by a predetermined distance toward the charger (step S606) and the process returns to step S602. If it is determined that the charger in the captured image satisfies the predetermined condition (YES in step S604), the drive controller 191 controls the arms 11 and 12 so that the mobile communication terminal 100 is in the prone state, and the charging unit 180 receives wireless power supply from the charger to charge the power supply 170 (step S605). The process is then terminated when charging is complete. The automatic charging process by the mobile communication terminal 100 is described above. In FIG. 6, the image is captured every time the terminal 100 moves a predetermined distance, but the image captured by the imaging unit 160 may be a moving image, and once the charger 70 is recognized in the captured image, the drive controller 191 of the controller 190 may control the wheels and arms to allow the terminal 100 to automatically detect the charger 70 in the captured image and approach it. As the terminal 100 approaches the charger 70, the imaging unit 160 captures a more downward image, and by the time the terminal 100 is positioned close to the charger 70, the terminal 100 is in a state close to the prone state.

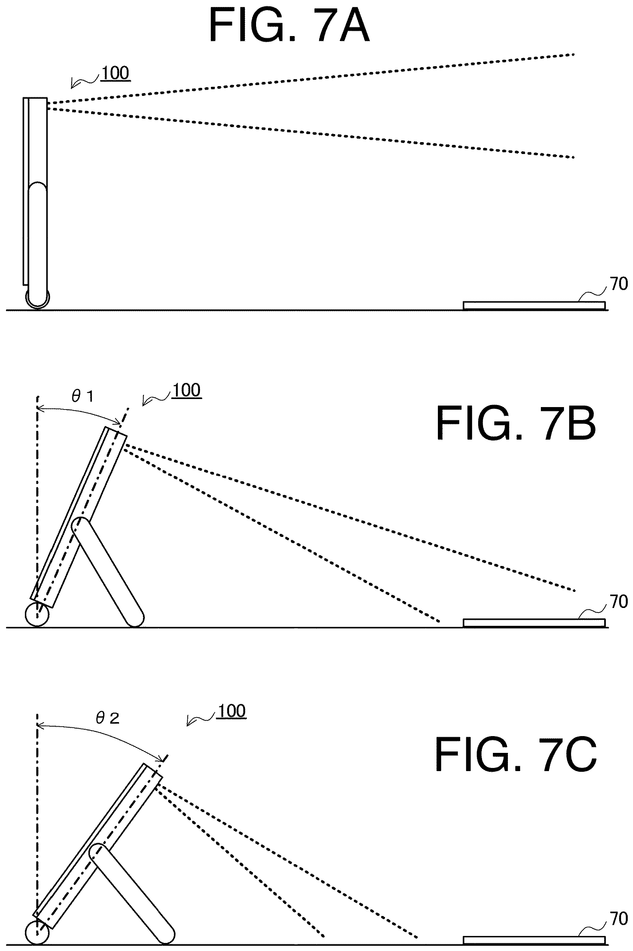

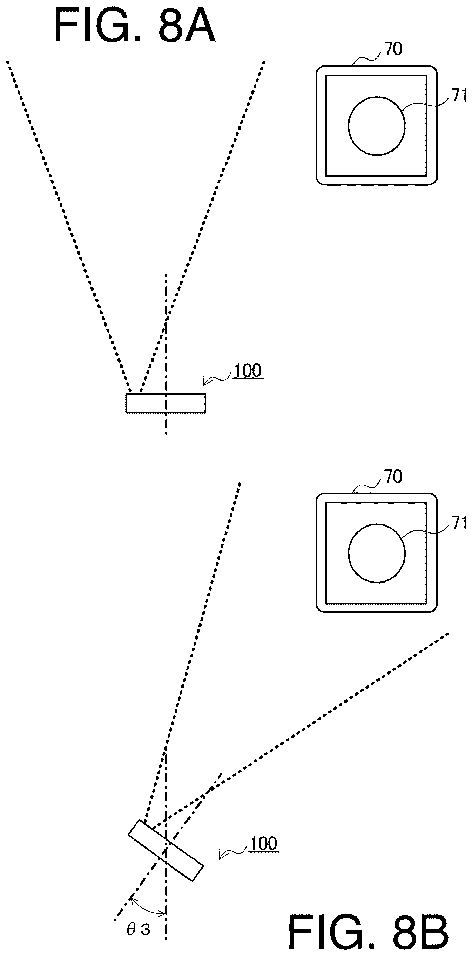

With reference to FIGS. 7A to 7C, the process in step S609 will be specifically described, and with reference to FIGS. 8A and 8B, the process in step S608 will be specifically described.

FIGS. 7A to 7C are diagrams illustrating a relationship between an angle of view from a side of the mobile communication terminal and the charger. FIG. 7A illustrates the mobile communication terminal 100 standing in an upright state, and the dotted line in the FIG. 7A indicates the angle of view (range of imaging) in the vertical direction by the imaging unit 160. In the case shown in FIG. 7A, the charger 70 is not included in the captured image. The angle of view shown in each of FIGS. 7A to 7C is an example and is not limited to this angle.

FIG. 7B illustrates the mobile communication terminal 100 inclined (inclined forward) by an angle *θ* 1 from the upright state by slightly rotating the rotary motors 15 and 16 of the arms 11 and 12 to bring the arms 11 and 12 forward. That is, the state is transitioned from the state shown in FIG. 7A to the state shown in FIG. 7B by executing step S609. In the case of FIG. 7B, the charger 70 is included in the captured image.

In contrast, FIG. 7C illustrates the state in which the mobile communication terminal 100 is inclined from the upright state by an angle *θ* 2 by further rotating the rotary motors 15 and 16 from the state shown in FIG. 7B, bringing the state of the mobile communication terminal 100 to be close to the prone state. In FIG. 7C, the charger 70 is not included in the captured image. In FIGS. 7A to 7C, an example is shown of searching for the charger 70 using the imaging unit 160 on the rear side of the mobile communication terminal 100 shown in FIG. 1B, but this searching may be performed using the imaging unit 160 on the front side shown in FIG. 1A, or both may be used. When performing charging, the mobile communication terminal 100 is basically placed on the charger 70 to allow the display 140 to be on the top such that the power transmitting antenna of the charger 70 is close to the power receiving antenna of the charging unit 180 of the mobile communication terminal 100. Accordingly, when the mobile communication terminal 100 captures the images and searches for the charger 70 in the manner shown in FIGS. 7A to 7C to reach the top of the charger 70, the display 140 can naturally face the top (as shown in FIG. 3B) and charging can be performed immediately. If the terminal can be placed with the surface on which the display 140 is provided as a bottom surface to perform charging, the display 140 may be placed as the bottom surface of the device, but it is preferable that the terminal be placed with the surface on which the display 140 is provided as a top surface since it is easier for the user to check the notification when an incoming e-mail or other such events is notified. In any case, it is preferable that the surface with the display 140 be placed as the top surface.

FIGS. 8A and 8B illustrate a relationship between an angle of view from a top of the mobile communication terminal and the charger. FIG. 8A illustrates the relationship between the charger 70 and the angle of view by the imaging unit 160 of the mobile communication terminal 100 when the mobile communication terminal 100 is standing in the upright state and viewed in the direction from the top.

The dotted line in FIG. 8A illustrates the angle of view of the imaging unit 160 in the horizontal direction. Further, the charger 70 includes a marker 71 as shown in FIG. 8A. The marker 71 may be configured by a different or more noticeable color than its surroundings, may have a special pattern drawn, or may use a retroreflective material to allow the terminal to find it. FIGS. 8A and 8B illustrate a form in which a circular marker 71 is provided in the center of the charger 70, but the shape of the marker 71 and the location of the marker 71 are not limited to the center of the charger 70. For example, the marker 71 may be square like a regular QR code (registered trademark).

In the case shown in FIG. 8A, the charger 70 is not included in the captured image.

In contrast, FIG. 8B illustrates a horizontally rotated state of the terminal in which the right wheel 13b is rotated rearward and the left wheel 13c is rotated forward by an angle *θ* 3 from the state shown in FIG. 8A by processing in step S608. This allows the imaging direction of the imaging unit 160 to be changed in the horizontal direction. In the state shown in FIG. 8B, the charger 70 is included in the captured image.

That is, with respect to the examples of FIGS. 7A to 8B, in the states of FIG. 7B and FIG. 8B, the determination unit 192 determines that the charger 70 is included in the captured image.

As described above, the mobile communication terminal 100 can change the angles of the terminal in the vertical and horizontal directions by changing the angles of the arms 11 and 12 and rotating the right wheel 13b and left wheel 13c, and change the direction of imaging by the imaging unit 160 to embody the search for the charger by imaging.

### Summary of Embodiments

According to the embodiments of the mobile communication terminal 100, the arms 11 and 12 corresponding to the arms can be driven to automatically change the imaging direction of the imaging unit 160 so that even if the charger 70 does not include a communication function, the mobile communication terminal 100, which functions as a robot, can search for the charger 70 and automatically move toward the charger 70 for charging with only the functions provided in the mobile communication terminal 100. In cases where the mobile communication terminal 100 is allowed to act freely as a robot, it naturally consumes power, but the mobile communication terminal 100 can perform charging by itself, reducing the time and efforts of the user. In addition, conventional mobile communication terminals may fail to be usable in an emergency if the user forgets to charge the battery, but this form of mobile communication terminal 100 reduces such risk.

### Variation

The mobile communication terminal according to the above embodiment is not limited to the above embodiment, and may be embodied by other methods. Various examples of variations will be described below.
(1) In the above embodiment, the charger 70 may include a communication unit for teaching the location of the charger 70 to the mobile communication terminal 100 in place of the marker 71. The mobile communication terminal 100 may then identify the positional relationship between the terminal 100 and the charger 70 by executing communication with the charger 70, and move to the charger 70 to execute charging.

The charger 70 may include a device such as an ultrasonic wave generator in place of a communication unit, in which case the mobile communication terminal 100 is configured to be able to detect ultrasonic waves. The terminal may search for the charger 70 on the basis of the reception strength of the ultrasonic waves (the stronger the reception strength is, the closer the terminal is to the charger 70).

In place of the ultrasonic device, the charger 70 may be capable of performing infrared communication, in which case the mobile communication terminal 100 may retain infrared communication capability in the same manner to identify the positional relationship between it and the charger 70.

(2) In the above embodiment, an example is described in which the marker 71 is attached to the mobile communication terminal 100 to allow the terminal 100 to easily search for the charger 70, but the marker 71 may be omitted. In this case, the mobile communication terminal 100 may retain information on the appearance of the charger 70 (images of the charger 70 captured from multiple different angles) and determine whether the charger 70 is included in the captured image by performing pattern matching with the captured image.

In place of the marker 71, the charger 70 itself may have a pattern painted on it that could serve as a marker. The mobile communication terminal 100 may read the pattern to identify the location of the charger 70. Alternatively, the charger 70 itself may be given a special coloring (coloring in a special color that is hard to be found in nature), and the terminal may be configured to determine whether the charger 70 is included in the captured image on the basis of whether the color is included in the captured image.

The marker 71 may correspond to a QR code, and the QR code may include an instruction to perform charging, and the mobile communication terminal 100 may be configured to start charging from the charger 70 upon receiving the charging instruction included in the QR code if the QR code is correctly read in the captured image. The correct reading of the QR code can be achieved by causing the imaging unit 160 to perform the image capturing in a manner as directly facing the QR code as possible. This can be achieved by a configuration in which the mobile communication terminal 100 is sufficiently close to the charger 70, and the state of the mobile communication terminal 100 is caused to be as close to the prone position as possible to capture the QR code. Therefore, in this case, the mobile communication terminal 100 may be recognized to be in a position to receive charging power supply from the charger 70, and charging can be started and performed without problems.

(3) In the embodiment above, the processing shown in FIG. 6 starts from the state in which the mobile communication terminal 100 stands (as shown in FIG. 7A), but the processing may start from the state in which the mobile communication terminal 100 is inclined at a predetermined angle, in which case the processing in step S609 may execute the arm rotation control in the direction of causing the state of the mobile communication terminal 100 to be closer to the standing state.

(4) In the processing in the embodiment above shown in FIG. 6, the processing in steps S607 to S609 includes gradually changing the imaging direction in the vertical direction to capture the images to search for the charger, and if the charger is not included in the captured images, changing the imaging direction in the horizontal direction and then gradually changing the imaging direction in the vertical direction again to search for the charger, and vice versa. That is, the processing may include gradually changing the imaging direction in the horizontal direction to perform one round of imaging, and then slightly changing the angle in the vertical direction to perform one round of imaging again.

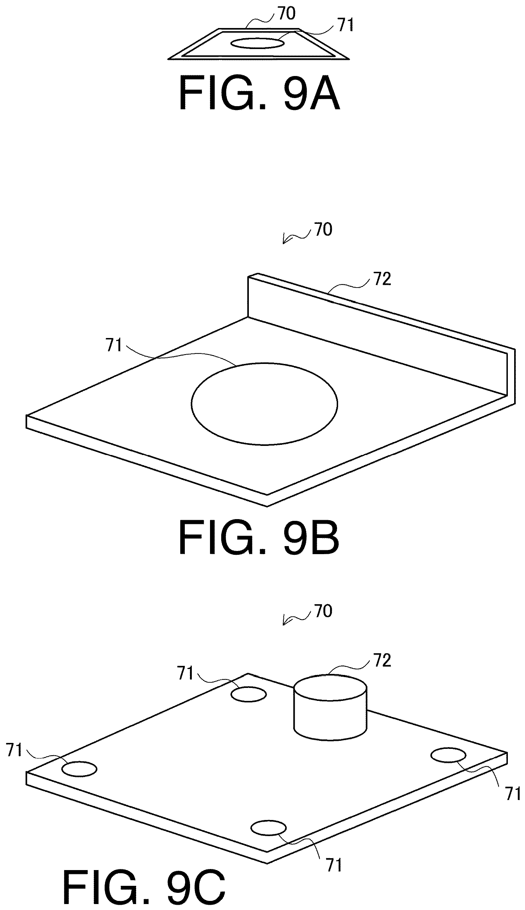

(5) In the embodiments above, the charger 70 is assumed to be a flat plate, but if the mobile communication terminal 100 is apart away from the charger 70, it may be captured in a state where it is hard to be recognized as the charger 70 from the captured image as shown in FIG. 9A, for example. Therefore, the charger 70 may be configured in three dimensions. That is, as illustrated in FIGS. 9B and 9C, the charger 70 may include a tab 72. The tab 72 may be colored by a special color different from the surroundings, have a particular pattern, be molded into a special shape, or be configured by a retroreflective material to allow the mobile communication terminal 100 to recognize that the charger 70 is in the captured image. In this way, the tab 72 may be provided on the flat plate portion to allow the mobile communication terminal 100 to easily find the charger 70 in the captured image. As described above, and as shown in FIG. 9C, the marker 71 may be located in a corner other than the center of the charger 70, and more than one marker 71 may be provided on the charger 70.

(6) The programs according to the embodiments of the present disclosure may be provided as stored in a computer-readable storage medium. The storage medium is directed to a "non-transitory tangible medium" capable of storing programs. The storage medium may include any suitable storage medium such as an HDD or SSD, or a suitable combination of two or more of these. The storage medium may be volatile, nonvolatile, or a combination of volatile and nonvolatile. The storage medium is not limited to these examples and may be any device or medium if it is capable of storing programs.

The mobile communication terminal 100 is capable of embodying the functional units illustrated in the embodiments by reading programs stored in a storage medium and executing the read programs, for example. The programs may be provided through any transmission medium (such as communication network and broadcast wave) to the mobile communication terminal 100. The mobile communication terminal 100 may, for example, embody the functions of the multiple functional units illustrated in the embodiments by executing programs downloaded via the Internet or other means.

The programs may also be implemented using, for example, scripting languages such as ActionScript, and JavaScript (registered trademark), object-oriented programming languages such as Objective-C, and Java (registered trademark), and markup languages such as HTML5.

At least a part of the processing in the mobile communication terminal 100 may be embodied by cloud computing configured by one or more computers. Each of the functional units of the mobile communication terminal 100 may be embodied by one or more circuits that embody the functions illustrated in the above embodiments, or multiple functional units may be embodied by a single circuit.

(7) Although the embodiments of the present disclosure have been described on the basis of various drawings and examples, those skilled in the art would be able to make various changes and modifications on the basis of the present disclosure. Accordingly, these variations and modifications are included within the scope of this disclosure. For example, the functions included in each method and step, for example, may be rearranged to be avoided to be logically inconsistent, and multiple methods and steps may be integrated or divided. The configurations shown in the embodiments above may be combined as appropriate.

## Claims

1. A mobile communication terminal (100) comprising:
a rectangular enclosure (10);
two arms (11, 12) wherein one end of each arm (11, 12) is rotationally supported by a rotary shaft (11a, 12a) against corresponding one side surface of both side surfaces of long sides of the enclosure (10);
a hand (11d, 12d) at another end of each arm (11, 12);
a leg (13) provided on one of short sides of the enclosure (10) in an independently movable manner;
a rotary motor (15, 16) for rotating the rotary shaft (11a, 12a) that supports corresponding one of the two arms (11, 12) on one end of the corresponding one of the arms (11, 12);
**characterized by** the mobile communication terminal (100) further comprising:
an imaging unit (160) provided on a main surface of the enclosure (10); and
a controller (190) that is configured to control the rotary motor (15, 16), wherein
the controller (190) is configured to determine whether a charger (70) is included in an image captured by the imaging unit (160), and if it determines that the charger (70) is not included in the captured image, the controller (190) is configured to drive the rotary motor (15, 16) to change an angle of view of the imaging unit (160) in a vertical direction by changing an angle between the main surface of the mobile communication terminal (100) including the imaging unit (160) and a ground surface to search for the charger (70), and
wherein the mobile communication terminal (100) is configured to move toward the charger (70) if the charger (70) is included in the captured image; and the mobile communication terminal (100) is configured to receive charging by the charger (70).

2. The mobile communication terminal (100) according to claim 1, wherein the leg (13) includes:
a first rotary shaft (13e) with an axis direction in a direction of the short sides of the enclosure (10);
a second rotary shaft (13g) coaxial with the first rotary shaft (13e);
a right wheel (13b) at one end of the first rotary shaft (13e);
a left wheel (13c) at one end of the second rotary shaft (13g);
a first traveling motor (13d) that is provided at another end of the first rotary shaft (13e) and configured to drive the right wheel (13b); and
a second traveling motor (13f) that is provided at another end of the second rotary shaft (13g) and configured to drive the left wheel (13c), wherein
if the controller (190) further determines that the charger (70) is not included in the image captured by the imaging unit (160), the controller (190) is configured to drive the first traveling motor (13d) and second traveling motor (13f) to change an angle of view of the imaging unit (160) in a horizontal direction to search for the charger (70).

3. The mobile communication terminal (100) according to claim 2, wherein if the controller (190) determines that the charger (70) is included in the captured image, the controller (190) is configured to drive the first traveling motor (13d) and second traveling motor (13f) to move the terminal (100) toward the charger (70) on the basis of a position of the charger (70) in the captured image.

4. The mobile communication terminal (100) according to claim 3, wherein
the imaging unit (160) is configured to perform sequential imaging while the terminal (100) moving toward the charger (70), and
the controller (190) is configured to rotate the rotary motor (15, 16) so that the charger (70) is included in a captured image each time the imaging unit (160) images.

5. The mobile communication terminal (100) according to claim 4, wherein the controller (190) is configured to stop the first traveling motor (13d) and second traveling motor (13f) if a rotation angle of the rotary motor (15, 16) reaches a predetermined angle.

6. The mobile communication terminal (100) according to claim 4, wherein the controller (190) is configured to stop the first traveling motor (13d) and second traveling motor (13f) if a predetermined object on the charger (70) is present in the image captured by the imaging unit (160).

7. The mobile communication terminal (100) according to claim 5 or 6, further comprising:
a storage battery (170); and
a charging unit (180) that is configured to charge the storage battery (170) with electric power, wherein
the charging unit (180) is configured to receive a wireless power supply from the charger (70) and charges the storage battery (180).

8. A method of controlling a mobile communication terminal (100) including: a rectangular enclosure (10); two arms (11, 12) wherein one end of each arm (11, 12) is rotationally supported by a rotary shaft (11a, 12a) against corresponding one of both side surfaces of long sides of the enclosure (10); a hand (11d, 12d) at another end of each arm (11, 12); a leg (13) provided on one side surface of short sides of the enclosure (10) in an independently movable manner; a rotary motor (15, 16) for rotating the rotary shaft (11a, 12a) that supports corresponding one of the two arms (11, 12) on one end of the corresponding one of the arms (11, 12); an imaging unit (160) provided on a main surface of the enclosure (10); and a controller (190) that controls the rotary motor (15, 16), the method including the steps of:
performing imaging by the imaging unit (160);
determining whether a charger (70) is included in a captured image obtained in the imaging step;
changing an angle of view of the imaging unit (160) in a vertical direction by driving the rotary motor (15, 16) to change an angle between the main surface of the mobile communication terminal (100) including the imaging unit (160) and a ground surface if it is determined that the charger (70) is not included in the captured image;
moving the terminal (100) toward the charger (70) if the charger (70) is included in the captured image; and
receiving charging by the charger (70).

9. A program causing a computer of a mobile communication terminal (100) including: a rectangular enclosure (10); two arms (11, 12) wherein one end of each arm (11, 12) is rotationally supported by a rotary shaft (11a, 12a) against corresponding one of both side surfaces of long sides of the enclosure (10); a hand (11d, 12d) at another end of each arm (11, 12); a leg (13) provided on one side surface of short sides of the enclosure (10) in an independently movable manner; a rotary motor (15, 16) for rotating the rotary shaft (11a, 12a) that supports corresponding one of the two arms (11, 12) on one end of the corresponding one of the arms (11, 12); an imaging unit (160) provided on a main surface of the enclosure (10); and a controller (190) that controls the rotary motor (15, 16), to embody the functions of:
performing imaging by the imaging unit (160);
determining whether a charger (70) is included in a captured image obtained by the imaging function;
changing an angle of view of the imaging unit (160) in a vertical direction by driving the rotary motor (15, 16) to change an angle between the main surface of the mobile communication terminal (100) including the imaging unit (160) and a ground surface if it is determined that the charger (70) is not included in the captured image;
moving the terminal (100) toward the charger (70) if the charger (70) is included in the captured image; and
receiving charging by the charger (70).

## Patentansprüche

1. Mobiles Kommunikationsendgerät (100), umfassend:
ein rechteckiges Gehäuse (10);
zwei Arme (11, 12), wobei ein Ende jedes Arms (11, 12) durch eine Drehwelle (11a, 12a) gegen eine entsprechende Seitenfläche beider Seitenflächen von langen Seiten des Gehäuses (10) drehgelagert ist;
eine Hand (11d, 12d) an einem anderen Ende jedes Arms (11, 12);
ein Bein (13), das an einer der kurzen Seiten des Gehäuses (10) auf unabhängig bewegbare Weise vorgesehen ist;
einen Drehmotor (15, 16) zum Drehen der Drehwelle (11a, 12a), die einen entsprechenden der beiden Arme (11, 12) an einem Ende des entsprechenden der Arme (11, 12) abstützt;
**dadurch gekennzeichnet, dass** das mobile Kommunikationsendgerät (100) ferner umfasst:
eine Bildaufnahmeeinheit (160), die auf einer Hauptfläche des Gehäuses (10) vorgesehen ist; und
eine Steuervorrichtung (190), die dazu ausgelegt ist, den Drehmotor (15, 16) zu steuern, wobei
die Steuervorrichtung (190) dazu ausgelegt ist zu bestimmen, ob ein Ladegerät (70) in einem durch die Bildaufnahmeeinheit (160) aufgenommenen Bild enthalten ist, und, wenn sie bestimmt, dass das Ladegerät (70) nicht in dem aufgenommenen Bild enthalten ist, die Steuervorrichtung (190) dazu ausgelegt ist, den Drehmotor (15, 16) anzutreiben, um einen Sichtwinkel der Bildaufnahmeeinheit (160) in einer Vertikalrichtung durch Ändern eines Winkels zwischen der die Bildaufnahmeeinheit (160) enthaltenden Hauptfläche des mobilen Kommunikationsendgeräts (100) und einer Bodenfläche zu ändern, um nach dem Ladegerät (70) zu suchen, und
wobei das mobile Kommunikationsendgerät (100) dazu ausgelegt ist, sich zu dem Ladegerät (70) zu bewegen, wenn das Ladegerät (70) in dem aufgenommenen Bild enthalten ist; und das mobile Kommunikationsendgerät (100) dazu ausgelegt ist, durch das Ladegerät (70) aufgeladen zu werden.

2. Mobiles Kommunikationsendgerät (100) nach Anspruch 1, wobei das Bein (13) umfasst:
eine erste Drehwelle (13e) mit einer Achsrichtung in einer Richtung der kurzen Seiten des Gehäuses (10);
eine zweite Drehwelle (13g), die koaxial zu der ersten Drehwelle (13e) ist;
ein rechtes Rad (13b) an einem Ende der ersten Drehwelle (13e) ;
ein linkes Rad (13c) an einem Ende der zweiten Drehwelle (13g);
einen ersten Fahrmotor (13d), der an einem anderen Ende der ersten Drehwelle (13e) vorgesehen und dazu ausgelegt ist, das rechte Rad (13b) anzutreiben; und
einen zweiten Fahrmotor (13f), der an einem anderen Ende der zweiten Drehwelle (13g) vorgesehen und dazu ausgelegt ist, das linke Rad (13c) anzutreiben, wobei
wenn die Steuervorrichtung (190) ferner bestimmt, dass das Ladegerät (70) nicht in dem durch die Bildaufnahmeeinheit (160) aufgenommenen Bild enthalten ist, die Steuervorrichtung (190) dazu ausgelegt ist, den ersten Fahrmotor (13d) und den zweiten Fahrmotor (13f) anzutreiben, um einen Sichtwinkel der Bildaufnahmeeinheit (160) in einer Horizontalrichtung zu ändern, um nach dem Ladegerät (70) zu suchen.

3. Mobiles Kommunikationsendgerät (100) nach Anspruch 2, wobei wenn die Steuervorrichtung (190) bestimmt, dass das Ladegerät (70) in dem aufgenommenen Bild enthalten ist, die Steuervorrichtung (190) dazu ausgelegt ist, den ersten Fahrmotor (13d) und den zweiten Fahrmotor (13f) anzutreiben, um das Endgerät (100) auf der Grundlage einer Position des Ladegeräts (70) in dem aufgenommenen Bild zu dem Ladegerät (70) zu bewegen.

4. Mobiles Kommunikationsendgerät (100) nach Anspruch 3, wobei
die Bildaufnahmeeinheit (160) dazu ausgelegt ist, während sich das Endgerät (100) zu dem Ladegerät (70) bewegt, eine sequentielle Bildaufnahme durchzuführen, und
die Steuervorrichtung (190) dazu ausgelegt ist, den Drehmotor (15, 16) zu drehen, sodass das Ladegerät (70) jedes Mal in einem aufgenommenen Bild enthalten ist, wenn die Bildaufnahmeeinheit (160) ein Bild aufnimmt.

5. Mobiles Kommunikationsendgerät (100) nach Anspruch 4, wobei die Steuervorrichtung (190) dazu ausgelegt ist, den ersten Fahrmotor (13d) und den zweiten Fahrmotor (13f) anzuhalten, wenn ein Drehwinkel des Drehmotors (15, 16) einen vorbestimmten Winkel erreicht.

6. Mobiles Kommunikationsendgerät (100) nach Anspruch 4, wobei die Steuervorrichtung (190) dazu ausgelegt ist, den ersten Fahrmotor (13d) und den zweiten Fahrmotor (13f) anzuhalten, wenn ein vorbestimmtes Objekt auf dem Ladegerät (70) in dem durch die Bildaufnahmeeinheit (160) aufgenommenen Bild vorhanden ist.

7. Mobiles Kommunikationsendgerät (100) nach Anspruch 5 oder 6, ferner umfassend:
eine Speicherbatterie (170); und
eine Ladeeinheit (180), die dazu ausgelegt ist, die Speicherbatterie (170) mit elektrischer Leistung aufzuladen, wobei
die Ladeeinheit (180) dazu ausgelegt ist, eine drahtlose Stromversorgung von dem Ladegerät (70) zu empfangen und die Speicherbatterie (180) aufzuladen.

8. Verfahren zum Steuern eines mobilen Kommunikationsendgeräts (100), umfassend: ein rechteckiges Gehäuse (10); zwei Arme (11, 12), wobei ein Ende jedes Arms (11, 12) mittels einer Drehwelle (11a, 12a) an einer entsprechenden von beiden Seitenflächen von langen Seiten des Gehäuses (10) drehbar abgestützt ist; eine Hand (11d, 12d) an einem anderen Ende jedes Arms (11, 12); ein Bein (13), das an einer Seitenfläche von kurzen Seiten des Gehäuses (10) auf unabhängig bewegbare Weise vorgesehen ist; einen Drehmotor (15, 16) zum Drehen der Drehwelle (11a, 12a), die einen entsprechenden der beiden Arme (11, 12) an einem Ende des entsprechenden der Arme (11, 12) abstützt; eine Bildaufnahmeeinheit (160), die auf einer Hauptfläche des Gehäuses (10) vorgesehen ist; und eine Steuervorrichtung (190), die den Drehmotor (15, 16) steuert, wobei das Verfahren die folgenden Schritte umfasst:
Aufnehmen eines Bildes durch die Bildaufnahmeeinheit (160);
Bestimmen, ob ein Ladegerät (70) in einem aufgenommenen Bild enthalten ist, das in dem Bildaufnahmeschritt erhalten wurde;
Ändern eines Sichtwinkels der Bildaufnahmeeinheit (160) in einer Vertikalrichtung durch Antreiben des Drehmotors (15, 16), um einen Winkel zwischen der die Bildaufnahmeeinheit (160) enthaltenden Hauptfläche des mobilen Kommunikationsendgeräts (100) und einer Bodenfläche zu ändern, wenn bestimmt wird, dass das Ladegerät (70) nicht in dem aufgenommenen Bild enthalten ist;
Bewegen des Endgeräts (100) zu dem Ladegerät (70), wenn das Ladegerät (70) in dem aufgenommenen Bild enthalten ist; und
Aufladen durch das Ladegerät (70).

9. Programm, das einen Computer eines mobilen Kommunikationsendgeräts (100) umfassend: ein rechteckiges Gehäuse (10); zwei Arme (11, 12), wobei ein Ende jedes Arms (11, 12) mittels einer Drehwelle (11a, 12a) an einer entsprechenden von beiden Seitenflächen von langen Seiten des Gehäuses (10) drehbar abgestützt ist; eine Hand (11d, 12d) an einem anderen Ende jedes Arms (11, 12); ein Bein (13), das an einer Seitenfläche von kurzen Seiten des Gehäuses (10) auf unabhängig bewegbare Weise vorgesehen ist; einen Drehmotor (15, 16) zum Drehen der Drehwelle (11a, 12a), die einen entsprechenden der beiden Arme (11, 12) an einem Ende des entsprechenden Arms (11, 12) abstützt; eine Bildaufnahmeeinheit (160), die auf einer Hauptfläche des Gehäuses (10) vorgesehen ist; und eine Steuervorrichtung (190), die den Drehmotor (15, 16) steuert, veranlasst, Folgendes auszuführen:
Aufnehmen eines Bildes durch die Bildaufnahmeeinheit (160);
Bestimmen, ob ein Ladegerät (70) in einem aufgenommenen Bild enthalten ist, das durch die Bildaufnahmesfunktion erhalten wurde;
Ändern eines Sichtwinkels der Bildaufnahmeeinheit (160) in einer Vertikalrichtung durch Antreiben des Drehmotors (15, 16), um einen Winkel zwischen der die Bildaufnahmeeinheit (160) enthaltenden Hauptfläche des mobilen Kommunikationsendgeräts (100) und einer Bodenfläche zu ändern, wenn bestimmt wird, dass das Ladegerät (70) nicht in dem aufgenommenen Bild enthalten ist;
Bewegen des Endgeräts (100) zu dem Ladegerät (70), wenn das Ladegerät (70) in dem aufgenommenen Bild enthalten ist; und
Aufladen durch das Ladegerät (70).

## Revendications

1. Terminal mobile de communication (100) comprenant :
une enceinte rectangulaire (10) ;
deux bras (11, 12), dans lequel une extrémité de chaque bras (11, 12) est supportée en rotation par un arbre rotatif (11a, 12a) contre une surface latérale correspondante des deux surfaces latérales de côtés longs de l'enceinte (10) ;
une main (11d, 12d) au niveau d'une autre extrémité de chaque bras (11, 12) ;
un segment (13) fourni sur l'un de côtés courts de l'enceinte (10) de manière indépendamment mobile ;
un moteur rotatif (15, 16) pour faire tourner l'arbre rotatif (11a, 12a) qui supporte le bras correspondant des deux bras (11, 12) sur une extrémité du bras correspondant des deux bras (11, 12) ;
**caractérisé en ce que** le terminal de communication mobile (100) comprend en outre :
une unité d'imagerie (160) fournie sur une surface principale de l'enceinte (10) ; et
un dispositif de commande (190) qui est configuré pour commander le moteur rotatif (15, 16), dans lequel
le dispositif de commande (190) est configuré pour déterminer si un chargeur (70) est inclus dans une image capturée par l'unité d'imagerie (160), et s'il détermine que le chargeur (70) n'est pas inclus dans l'image capturée, le dispositif de commande (190) est configuré pour entraîner le moteur rotatif (15, 16) pour changer un angle de vision de l'unité d'imagerie (160) dans une direction verticale en changeant un angle entre la surface principale du terminal de communication mobile (100) incluant l'unité d'imagerie (160) et une surface du sol pour chercher le chargeur (70), et
dans lequel le terminal de communication mobile (100) est configuré pour se déplacer vers le chargeur (70) si le chargeur (70) est inclus dans l'image capturée ; et le terminal de communication mobile (100) est configuré pour recevoir une charge par le chargeur (70).

2. Terminal de communication mobile (100) selon la revendication 1, dans lequel le segment (13) inclut :
un premier arbre rotatif (13e) avec une direction d'axe dans une direction des côtés courts de l'enceinte (10) ;
un second arbre rotatif (13g) coaxial au premier arbre rotatif (13e) ;
une roue droite (13b) au niveau d'une extrémité du premier arbre rotatif (13e) ;
une roue gauche (13c) au niveau d'une extrémité du second arbre rotatif (13g) ;
un premier moteur de déplacement (13d) qui est fourni au niveau d'une autre extrémité du premier arbre rotatif (13e) et configuré pour entraîner la roue droite (13b) ; et
un second moteur de déplacement (13f) qui est fourni au niveau d'une autre extrémité du second arbre rotatif (13g) et configuré pour entraîner la roue gauche (13c), dans lequel
si le dispositif de commande (190) détermine en outre que le chargeur (70) n'est pas inclus dans l'image capturée par l'unité d'imagerie (160), le dispositif de commande (190) est configuré pour entraîner le premier moteur de déplacement (13d) et le second moteur de déplacement (13f) pour changer un angle de vision de l'unité d'imagerie (160) dans une direction horizontale pour chercher le chargeur (70).

3. Terminal de communication mobile (100) selon la revendication 2, dans lequel si le dispositif de commande (190) détermine que le chargeur (70) est inclus dans l'image capturée, le dispositif de commande (190) est configuré pour entraîner le premier moteur de déplacement (13d) et le second moteur de déplacement (13f) pour déplacer le terminal (100) vers le chargeur (70) sur la base d'une position du chargeur (70) dans l'image capturée.

4. Terminal de communication mobile (100) selon la revendication 3, dans lequel
l'unité d'imagerie (160) est configurée pour réaliser une imagerie séquentielle pendant que le terminal (100) se déplace vers le chargeur (70), et
le dispositif de commande (190) est configuré pour faire tourner le moteur rotatif (15, 16) de sorte que le chargeur (70) est inclus dans une image capturée à chaque fois que l'unité d'imagerie (160) capture une image.

5. Terminal de communication mobile (100) selon la revendication 4, dans lequel le dispositif de commande (190) est configuré pour arrêter le premier moteur de déplacement (13d) et le second moteur de déplacement (13f) si un angle de rotation du moteur rotatif (15, 16) atteint un angle prédéterminé.

6. Terminal de communication mobile (100) selon la revendication 4, dans lequel le dispositif de commande (190) est configuré pour arrêter le premier moteur de déplacement (13d) et le second moteur de déplacement (13f) si un objet prédéterminé sur le chargeur (70) est présent dans l'image capturée par l'unité d'imagerie (160).

7. Terminal de communication mobile (100) selon la revendication 5 ou 6, comprenant en outre :
une batterie de stockage (170) ; et
une unité de charge (180) qui est configurée pour charger la batterie de stockage (170) avec de l'énergie électrique, dans lequel
l'unité de charge (180) est configurée pour recevoir une alimentation sans fil provenant du chargeur (70) et charge la batterie de stockage (180).

8. Procédé de commande d'un terminal de communication mobile (100) incluant : une enceinte rectangulaire (10) ; deux bras (11, 12) dans lequel une extrémité de chaque bras (11, 12) est supportée en rotation par un arbre rotatif (11a, 12a) contre une surface correspondante des deux surfaces latérales de côtés longs de l'enceinte (10) ; une main (11d, 12d) au niveau d'une autre extrémité de chaque bras (11, 12) ; un segment (13) fourni sur une surface latérale de côtés courts de l'enceinte (10) de manière indépendamment mobile ; un moteur rotatif (15, 16) pour faire tourner l'arbre rotatif (11a, 12a) qui supporte le bras correspondant des deux bras (11, 12) sur une extrémité du bras correspondant des deux bras (11, 12) ; une unité d'imagerie (160) fournie sur une surface principale de l'enceinte (10) ; et un dispositif de commande (190) qui commande le moteur rotatif (15, 16), le procédé incluant les étapes suivantes :
la réalisation d'une imagerie par l'unité d'imagerie (160) ;
le fait de déterminer si un chargeur (70) est inclus dans une image capturée obtenue lors de l'étape d'imagerie ;
le changement d'un angle de vision de l'unité d'imagerie (160) dans une direction verticale en entraînant le moteur rotatif (15, 16) pour changer un angle entre la surface principale du terminal de communication mobile (100) incluant l'unité d'imagerie (160) et une surface du sol s'il est déterminé que le chargeur (70) n'est pas inclus dans l'image capturée ;
le déplacement du terminal (100) vers le chargeur (70) si le chargeur (70) est inclus dans l'image capturée ; et
la réception de charge par le chargeur (70).

9. Programme amenant un ordinateur d'un terminal de communication mobile (100) incluant : une enceinte rectangulaire (10) ; deux bras (11, 12) dans lequel une extrémité de chaque bras (11, 12) est supportée en rotation par un arbre rotatif (11a, 12a) contre une surface correspondante des deux surfaces latérales de côtés longs de l'enceinte (10) ; une main (11d, 12d) au niveau d'une autre extrémité de chaque bras (11, 12) ; un segment (13) fourni sur une surface latérale de côtés courts de l'enceinte (10) de manière indépendamment mobile ; un moteur rotatif (15, 16) pour faire tourner l'arbre rotatif (11a, 12a) qui supporte le bras correspondant des deux bras (11, 12) sur une extrémité du bras correspondant des deux bras (11, 12) ; une unité d'imagerie (160) fournie sur une surface principale de l'enceinte (10) ; et un dispositif de commande (190) qui commande le moteur rotatif (15, 16), à mettre en œuvre les fonctions suivantes :
la réalisation d'une imagerie par l'unité d'imagerie (160) ;
le fait de déterminer si un chargeur (70) est inclus dans une image capturée obtenue par la fonction d'imagerie ;
le changement d'un angle de vision de l'unité d'imagerie (160) dans une direction verticale en entraînant le moteur rotatif (15, 16) pour changer un angle entre la surface principale du terminal de communication mobile (100) incluant l'unité d'imagerie (160) et une surface du sol s'il est déterminé que le chargeur (70) n'est pas inclus dans l'image capturée ;
le déplacement du terminal (100) vers le chargeur (70) si le chargeur (70) est inclus dans l'image capturée ; et
la réception de charge par le chargeur (70).
